# EUROPÄISCHE PATENTSCHRIFT

(11) **EP 1 477 691 B1**
(45) Veröffentlichungstag und Bekanntmachung des Hinweises auf die Patenterteilung: **03.05.2006**
(21) Anmeldenummer: 03009854.5
(22) Anmeldetag: 13.05.2003
(51) Int. Cl.: F16C 19/54, F16C 35/06

(54) **Lagereinrichtung**
Bearing arrangement
Agencement de palier

(43) Veröffentlichungstag der Anmeldung: 17.11.2004
(73) Patentinhaber: Joseph Vögele AG, 68146 Mannheim (DE)
(72) Erfinder: Braun, Arthur, 67146 Deidesheim (DE)
(74) Vertreter: Grünecker, Kinkeldey, Stockmair & Schwanhäusser Anwaltssozietät

(56) Entgegenhaltungen:
- DE-C- 548 885
- US-A- 3 795 456
- US-A- 3 797 612

## Beschreibung

Die Erfindung bezieht sich auf eine Verteilerschnecken-Antriebslagerung eines Straßenfertigers.

Die Antriebslagerung für Verteilerschnecken bei Straßenfertigern wurde bislang so ausgeführt, dass ein Lagerzapfen durch eine Ausnehmung in einem Lagerkasten (Mittellagerbock) geführt wurde, wobei sich der Lagerzapfen in einer Halterung im Mittellagerbock sowohl radial als auch axial abstützt. Die aus der Halterung beidseitig herausragenden Enden des Lagerzapfens sind jeweils mit einem Drehlager versehen, auf dem Antriebsräder laufen. Diese Antriebslager für Verteilerschnecken sind jedoch einer hohen Verschmutzungsgefahr und rauen Betriebsbedingungen ausgesetzt. Es ist deshalb vorteilhaft, die Lager und den Lagerzapfen austauschbar auszubilden, so dass beschädigte Lager leicht ersetzt werden können. Diese Austauschbarkeit wurde bisher konstruktiv derart gelöst, dass man den Lagerzapfen radial in zwei Teile getrennt hat, wobei jedes der Lagerzapfenteile mit jeweils einem Lager für ein Antriebsrad versehen ist, diese beiden Lagerzapfenteile anschließend beidseitig in die Ausnehmung der Halterung bis in eine radiale und axiale Abstützung an der Halterung eingesteckt und anschließend durch Schrauben miteinander verbunden werden, die sich parallel zur Axialrichtung von beiden Lagerzapfenteilen her in das jeweils gegenüberliegende Lagerzapfenteil erstrecken. Diese Konstruktion erlaubt zwar ein Austauschen der Lager, es können jedoch Probleme hinsichtlich der Festigkeit des Lagerbolzens auftreten. Insbesondere bei hohen Belastungen und/oder längeren Hebelarmen, die den Lagerzapfen auf Biegung beanspruchen, können die beiden Lagerzapfenteile so belastet werden, dass sie nicht mehr axial fluchtend miteinander ausgerichtet sind. Dies führt zu einem verstärkten Verschleiß der gesamten Lagerung und zieht insbesondere auch die Halterung im Lagerkasten in Mitleidenschaft. Ist die Halterung beschädigt, so muss der gesamte Lagerkasten ausgebaut und ersetzt bzw. die Halterung nachgearbeitet werden, was äußerst umständlich ist.

Die US-A-3 797 612 betrifft eine Trommelbremseinrichtung für ein Fahrzeug, die eine erste und eine zweite Bremstrommel aufweist, die zu einer Einheit verschraubt sind. Die Einheit ist auf einem Lagerzapfen gelagert, der einen inneren Lagerzapfen und eine aufgeschraubte Hülse aufweist, wobei eines der zwei oder vier Lager der Trommeleinheit auf der Hülse sitzt. Der Lagerzapfen wird durch die Antriebswelle radial und axial gehalten und dient seinerseits als Halterung für Teile des Bremsgehäuses.

Der Erfindung liegt somit die Aufgabe zugrunde, eine Lagereinrichtung zu schaffen, bei der Teile problemlos ausgewechselt werden können, ohne dass Festigkeitsprobleme auftreten.

Die Aufgabe wird durch die im Anspruch 1 angegebenen Merkmale gelöst.

Die erfindungsgemäße Ausgestaltung vermeidet den Schwachpunkt der radialen Trennung des Lagerzapfens, so dass er eventuellen Biegebelastungen wesentlich besser widerstehen kann. Dadurch besteht auch die Möglichkeit, die Verteilerschnecken in verschiedenen Stufen zu erweitem oder die Lagerung komplett für lange Schneckenwellen zu konzipieren, wobei es die erfindungsgemäße Ausgestaltung auch gestattet, zur Leistungssteigerung Speziallager einzubauen, wie beispielsweise Carb- oder Tonnenlager. Auch kann die Lagerung nachträglich geändert werden, wobei der alte Lagerkasten weiter verwendet werden kann.

Vorteilhafte Weiterbildungen der Erfindung sind den Unteransprüchen zu entnehmen.

Von besonderem Vorteil ist die Ausgestaltung nach Anspruch 4, die sich zusätzlich verschleißmindemd auswirkt, so dass gegebenenfalls sogar auf eine Bearbeitung der Halterung verzichtet werden kann.

Angepasst an verschiedene Lager und/oder als Verschleißteil kann der Lagerzapfen gemäß Anspruch 9 als Ersatzteil zur Verfügung gestellt werden.

Ein Ausführungsbeispiel der Erfindung wird nachfolgend anhand der Zeichnungen näher erläutert. Es zeigen:
- Fig. 1: eine schematische Darstellung eines Teils einer Verteilerschnecke für einen Straßenfertiger, und
- Fig. 2: einen Axialschnitt durch eine erfindungsgemäße Lagereinrichtung.

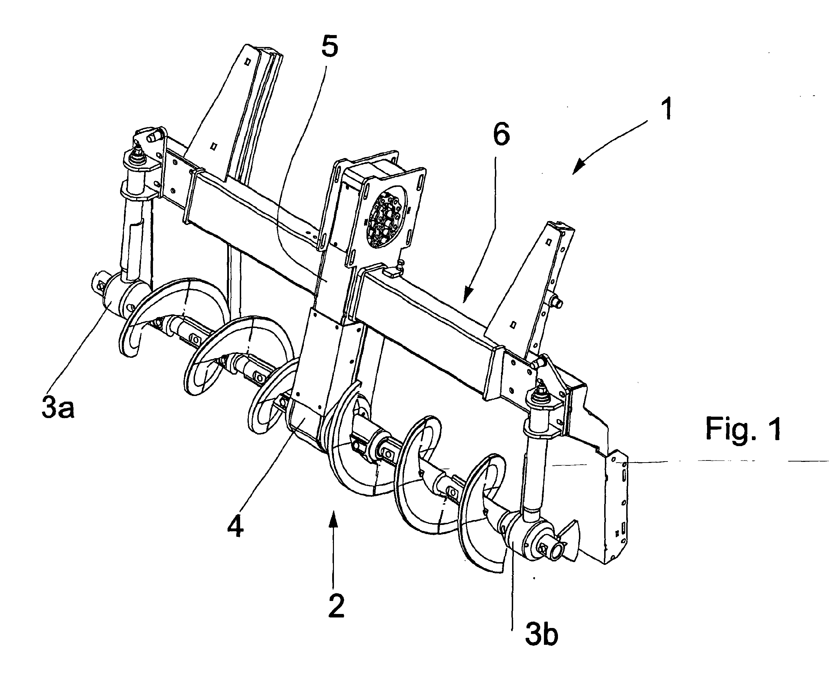

Fig. 1 zeigt in schematischer Darstellung die wesentlichsten Bestandteile einer Verteilerschnecke 1, wie sie zum Transport von bituminösem Einbaugut in Straßenfertigem verwendet wird. Die Verteilerschnecke 1 enthält die eigentliche Schneckenwelle 2, die im dargestellten Ausführungsbeispiel linke und rechte Schneckenwellenhälften aufweist, die jeweils in äußeren, endseitigen Lagern 3a, 3b gelagert sind, die herkömmlich ausgestaltet sind, und deren innere Enden in einem Mittellagerbock 4 in einem Lagerkasten 5 aufgenommen sind, das den Antrieb für die Schneckenwelle 2 aufnimmt. Die Verteilerschnecke 1 ist in herkömmlicher Weise über ein Gestell 6 mit dem Straßenfertiger verbunden.

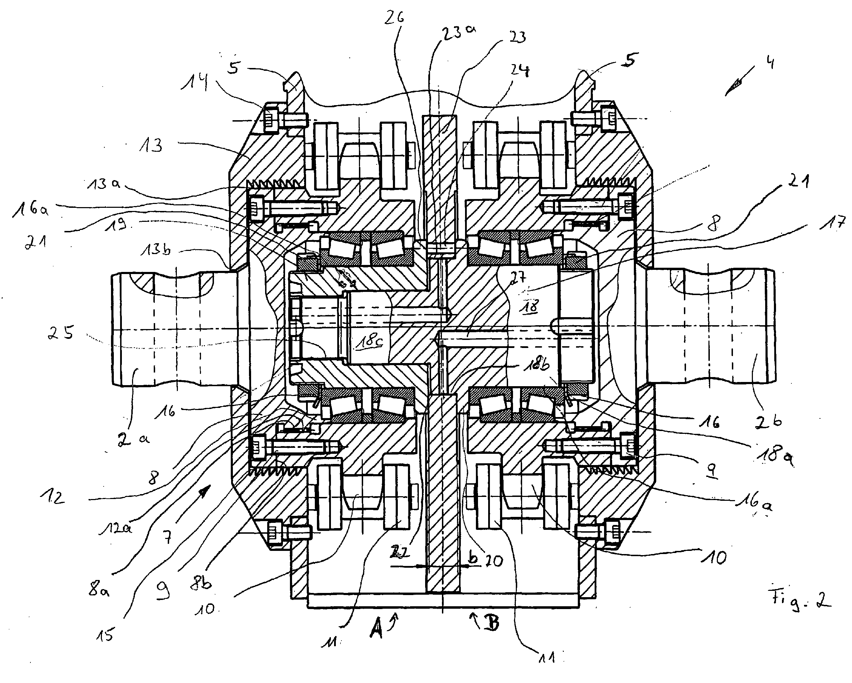

Fig. 2 zeigt einen Axialschnitt durch den Lagerkasten 5 an einer Stelle, an der die beiden Schneckenwellenhälften über Antriebszapfen 2a, 2b in einer erfindungsgemäß ausgerüsteten Lagereinrichtung 7 mit linken und rechten Lagerhälften A, B im Lagerkasten 5 gelagert sind. Die Lagerung der beiden Schneckenwellenhälften ist bis auf die nachfolgend beschriebenen Einzelheiten identisch, so dass zunächst nur die Lagerung des Antriebszapfen 2a der Schneckenwelle in der linken Lagerhälfte A beschrieben werden soll.

Der Antriebszapfen 2a ist fest mit einem Radialflansch 8 verbunden, der über Schrauben oder Bolzen 9 mit einem Antriebsrad 10 verbunden ist, das im vorliegenden Ausführungsbeispiel als Kettenrad ausgebildet ist, das über eine Kette 10 drehend angetrieben wird. Das Antriebsrad 10 liegt auf einer Schulter 12 des Radialflansches 8 auf und hat mit dem Radialflansch 8 eine axiale Berührungsfläche 8a und eine radiale Berührungsfläche 8b. Im Bereich der axialen Berührungsfläche 8a ist zwischen dem Radialflansch 8 und dem Antriebsrad 10 eine kraftübertragende Verzahnung bzw. Riffelung 12a vorgesehen, die die Kraftübertragung vom Antriebsrad 10 auf den Antriebszapfen 2a verbessert. Die radiale Berührungsfläche 8b wird von den Schrauben 9 durchsetzt und befindet sich innerhalb einer axialen Ausnehmung 13a einer Abdeckscheibe 13, die eine mittige Öffnung 13b aufweist, durch die sich der Antriebszapfen 2a erstreckt, und die über Schrauben 14 am Lagerkasten 5 angeschraubt ist. Die axiale Ausnehmung 13a ist mit Schmiermittelnuten 15 in Form von Rillen oder Riefen versehen und bildet ein Gleitlager für den Radialflansch 8 und das Antriebsrad 10.

Das Antriebsrad 10 ist über ein Lager 16, das im dargestellten Ausführungsbeispiel als Wälzlager, insbesondere als Rollenlager, ausgebildet ist, auf einem für beiden Hälften A und B der Lagereinrichtung 7 gemeinsamen Lagerzapfen 17 gelagert. Der Lagerzapfen 17 ist in Axialrichtung zweigeteilt und enthält einen sich durch beide Hälften A, B erstreckenden Zapfenkörper 18 und eine Hülse 19. Der Zapfenkörper 18 enthält einen ersten Bereich 18a an einem seiner Enden, der mit einem Aufnahmesitz 16a für eines der Wälzlager 16 versehen ist. Der Aufnahmesitz 16a wird im Abstand zum freien Ende des ersten Bereiches 18a von einem Radialflansch 20 begrenzt. Der Aufnahmesitz 16a ist so ausgebildet, dass das Lager 16 lösbar aufgeschoben und über die Schulter 12 des anliegenden Ringflansches 8 und eine der üblichen Sicherungseinrichtungen 21 an Ort und Stelle gehalten wird.

An den ersten Bereich 18a schließt sich ein zweiter Bereich 18b des Zapfenkörpers 18 an, dessen Außendurchmesser geringer als der Außendurchmesser des Radialflansches 20 ist und der mit einer sich axial erstreckenden Anlagefläche 22 versehen ist. Mit dieser Anlagefläche 22 wird der Lagerzapfen 17 in einer Aufnahmeöffnung 23a einer Halterung 23 aufgenommen, die Teil des Lagerkastens 5 ist bzw. fest mit dem Lagerkasten 5 verbunden ist. Die Anlagefläche 22 weist eine Breite b auf, die geringer ist als die Breite der Halterung 23 im Bereich der Aufnahmeöffnung 23a. Weiterhin erstrecken sich Stifte 24 zwischen dem Radialflansch 20 durch die Halterung 23, die als Drehsicherung für den Lagerzapfen 17 dienen.

Im Anschluss an den mit der Anlagefläche 22 versehenen zweiten Bereich 18b weist der Zapfenkörper 18 einen dritten Bereich 18c auf, dessen Durchmesser gegenüber dem Durchmesser der ersten und zweiten Bereiche 18a, 18b wiederum verringert ist. Am axialen Ende des dritten Bereichs 18c ist ein Außengewinde 25 vorgesehen, auf das die mit Innengewinde versehene Hülse 19 aufgeschraubt werden kann. Die Hülse 19 kann in aufgeschraubter Stellung durch geeignete Maßnahmen, wie beispielsweise durch Hammerschlagsicherung oder dgl. gegen ein unbeabsichtigtes Lösen gesichert werden.

Die Hülse 19 weist auf ihrer Außenseite wiederum einen Aufnahmesitz 16a für das Lager 16 auf, dessen Unterschale durch Sicherungseinrichtungen 21 gesichert wird, und dessen Oberschale durch die Schulter 12 des Ringflansches 8 gehalten wird. Die Hülse 19 enthält an der der Halterung 23 zugewandten Seite einen Ringflansch 26, der an der Halterung 23 anliegt, wenn die Hülse 19 auf den Zapfenkörper 18 aufgeschraubt wurde. Auf diese Weise wird der Lagerzapfen 17 an der Halterung 23 über die beiden Ringflansche 20 und 26 in Axialrichtung und über die Anlageflächen 22a und 23a in Radialrichtung abgestützt. Die Hülse 19 wirkt weiterhin als Spannvorrichtung zum Festlegen des Lagerzapfens 17 in der Halterung 23.

Mit dem Bezugszeichen 27 sind Schmiermittelkanäle gekennzeichnet, die die gesamte Lagereinrichtung 7 in üblicher Weise mit Schmiermittel versorgen.

Im dargestellten Ausführungsbeispiel sind die Hälften A und B der Lagereinrichtung 7 so ausgebildet, dass bis auf den Lagerzapfen in beiden Lagerhälften A, B identische Teile verwendet werden können. Für Spezialfälle ist es jedoch auch möglich, beispielsweise in beiden Lagerhälften unterschiedliche Lager und/oder unterschiedliche Antriebsräder oder dgl. einzusetzen.

Die Montage der erfindungsgemäßen Lagereinrichtung 7 erfolgt im dargestellten Ausführungsbeispiel derart, dass zunächst der Zapfenkörper 18 mit montiertem Lager 16 und montiertem Antriebsrad 10 von der linken Lagerhälfte B durch die Ausnehmung 23a der Halterung 23 gesteckt wird, bis der Flansch 20 an der Halterung 23 anschlägt und die Verdrehsicherung über die Stifte 24 erfolgt ist. Dann wird von der Seite der linken Lagerhälfte A her die Hülse 19 mit dem darauf montierten Lager 16 und dem Antriebsrad 10 auf den Zapfenkörper 18 aufgeschraubt, bis der Flansch 26 mit einer vorbestimmten Anpresskraft an der Halterung 23 anliegt. Diese Stellung der Hülse 19 auf dem Zapfenkörper 18 wird beispielsweise durch Hammerschlag gesichert. Anschließend wird an beiden Lagerhälften A, B der Radialflansch 8 mit dem daran befestigten Antriebszapfen 2a bzw. 2b in die Verzahnung 12a gedrückt und durch die Schrauben 9 am Antriebsrad 10 festgeschraubt. Anschließend wird die Abdeckscheibe 13 aufgesteckt und über die Schrauben 14 mit dem Lagerkasten 5 verschraubt.

Soll eines oder beide Lager ausgetauscht werden, so erfolgt die Demontage in umgekehrter Richtung.

In Abwandlung des beschriebenen und gezeichneten Ausführungsbeispiels kann die Hülse durch andere Befestigungsmittel mit dem Zapfenkörper verbunden werden. Die Lagersitze auf der Hülse und auf dem Zapfenkörper können unterschiedlich ausgebildet sein, um unterschiedliche Lager aufzunehmen. Auch die Lagerhälften der Lagereinrichtung können in sich verschieden ausgebildet sein. Lagerzapfen und Lagerhülse, gegebenenfalls mit bereits darauf befestigten Lagern, können als Ersatz- bzw. Austauschteil hergestellt und geliefert werden. Die Erfindung ist auch bei Lagereinrichtungen mit mehr als zwei Lagern brauchbar.

## Patentansprüche

1. Verteilerschnecken-Antriebseinrichtung eines Straßenfertigers, mit einer in einem Lagerkasten (5) untergebrachten Lagereinrichtung (7) für zwei Antriebsräder (10), die über jeweils einem Lager (16) auf einem axial zweigeteilten Lagerzapfen (17) sitzen, wobei der Lagerzapfen (17) einen sich einstückig durch beide Lager (16) erstreckenden Zapfenkörper (18) und eine lösbar auf dem Zapfenkörper (18) angeordnete Hülse (19) aufweist, wobei eines der Lager (16) auf der Hülse (19) und das andere Lager (16) auf dem Zapfenkörper (18) sitzt, wobei der Lagerzapfen (17) mit dem Zapfenkörper (18) zwischen den Lagern (16) auf einer Halterung (23) des Lagerkastens (5) radial und in beiden Richtungen axial abgestützt ist, und mit einer Drehsicherung (24) versehen ist, und wobei die Hülse (19) als Spannvorrichtung zum Festlegen des Lagerzapfens (17) in der Halterung (23) wirkt.

2. Antriebseinrichtung nach Anspruch 1, **dadurch gekennzeichnet, dass** die Hülse (19) auf dem Zapfenkörper (18) aufgeschraubt ist.

3. Antriebseinrichtung nach Anspruch 1 oder 2, **dadurch gekennzeichnet, dass** die Hülse (19) bis zur Halterung (23) reicht und mit einem an der Halterung (23) anliegenden Spannflansch (26) versehen ist.

4. Antriebseinrichtung nach einem der Ansprüche 1 bis 3, **dadurch gekennzeichnet, dass** wenigstens ein Antriebsrad (10) mit einer Welle (2) lösbar verbunden ist, wobei zwischen dem Antriebsrad (10) und der Welle (2) eine kraftübertragende Verbindung (9, 12a) vorgesehen ist.

5. Antriebseinrichtung nach Anspruch 4, **dadurch gekennzeichnet, dass** die kraftübertragende Verbindung eine kraftübertragende Verzahnung (12a) enthält.

6. Antriebseinrichtung nach einem der Ansprüche 1 bis 5, **dadurch gekennzeichnet, dass** das Lager (16) lösbar auf der Hülse (19) sitzt.

7. Antriebseinrichtung nach einem der Ansprüche 1 bis 5, **dadurch gekennzeichnet, dass** das Lager (16) lösbar auf dem Zapfenkörper (18) sitzt.

8. Antriebseinrichtung nach einem der Ansprüche 1 bis 7, **dadurch gekennzeichnet, dass** der Zapfenkörper (18) in Axialrichtung aufeinanderfolgend einen Aufnahmesitz (16a) für eines der Lager (16), eine Anlagefläche (22) für die Halterung (23) und einen Befestigungsbereich (25) für die Hülse (19) aufweist, dessen Durchmesser kleiner als der Durchmesser des Zapfenkörpers (18) im Bereich der Anlagefläche (22) ist.

9. Lagerzapfen für eine Antriebseinrichtung nach einem der Ansprüche 1 bis 8, **gekennzeichnet durch** einen Zapfenkörper (18) mit einem ersten Bereich (18a), der mit einem Aufnahmesitz (16a) für ein Lager (16) versehen ist, einem zweiten Bereich (18b), der mit einer Anlagefläche (22) für eine Halterung (23) versehen ist, die vom ersten Bereich (18a) **durch** einen Ringflansch (20) getrennt ist, sowie einen dritten Bereich (18c) an der dem Ringflansch (20) abgewandten Seite der Anlagefläche (22), wobei der dritte Bereich (18c) einen Befestigungsbereich (25) für eine Hülse (19) enthält, wobei die Hülse (19) mit einem Aufnahmesitz (16a) für ein Lager (16) und mit einem Spannflansch (26) versehen ist.

## Claims

1. Distributor screw drive apparatus of a road finisher with a bearing device (7) housed in a bearing box (5) for two drive wheels (10) which are arranged respectively through a bearing (16) on a journal (17) divided axially into two wherein the journal (17) has a bearing body extending integrally through the two bearings (16) and has a sleeve (19) arranged in a releasable way on the bearing body (18) wherein one of the bearings (16) lies on the sleeve (19) and the other bearing (16) lies on the bearing body (18) wherein the journal is supported with the bearing body (18) between the bearings (16) on a retaining part (23) of the bearing box (5) radially and in both directions axially and is provided with rotationally securing means (24) and wherein the sleeve (19) works as a fixing device for fixing the journal (17) in the retaining part (23).

2. Drive apparatus according to claim 1, **characterised in that** the sleeve (19) is screwed onto the bearing body (18) .

3. Drive apparatus according to claim 1 or 2, **characterised in that** the sleeve (19) reaches as far as the retaining part (23) and is provided with a fixing flange (26) lying on the retaining part (23).

4. Drive apparatus according to one of the claims 1 to 3, **characterised in that** at least one drive wheel (10) is connected in a releasable way to a shaft (2) wherein a force-transmitting connection (9, 12a) is provided between the drive wheel (10) and the shaft (2).

5. Drive apparatus according to claim 4, **characterised in that** the force-transmitting connection contains force-transmitting toothing (12a).

6. Drive apparatus according to one of the claims 1 to 5, **characterised in that** the bearing (16) is arranged on the sleeve (19) in a releasable way.

7. Drive apparatus according to one of the claims 1 to 5, **characterised in that** the bearing (16) is arranged on the bearing body (18) in a releasable way.

8. Drive apparatus according to one of the claims 1 to 7, **characterised in that** the bearing body (18) has, following each other in axial direction, a mounting seat (16a) for one of the bearings (16), a mounting area (22) for the retaining part (23) and a fixing area (25) for the sleeve (19) whose diameter is smaller than the diameter of the bearing body (18) in the region of the mounting area (22).

9. Journal for a drive apparatus according to one of the claims 1 to 8, **characterised by** a journal body (18) with a first area (18a) which is provided with a mounting seat (16a) for a bearing (16), a second area (18b) which is provided with a mounting area (22) for a retaining part (23) which is separated from the first area (18a) by an annular flange (20) and a third area (18c) on the side of the mounting area (22) facing away from the annular flange (20) wherein the third area (18c) contains a fixing area (25) for a sleeve (19) wherein the sleeve (19) is provided with a mounting seat (16a) for a bearing (16) and with a fixing flange (26).

## Revendications

1. Dispositif d'entraînement à vis sans fin de distribution d'un finisseur de chaussée, comprenant un dispositif de palier (7) placé dans un logement de palier (5) pour deux roues motrices (10) qui sont placées chacune par l'intermédiaire d'un palier (16) sur un tourillon (17) divisé axialement en deux parties, dans lequel le tourillon (17) présente un corps de tourillon (18) s'étendant d'un seul tenant à travers les deux paliers (16) et un manchon (19) disposé de manière amovible sur le corps de tourillon (18), dans lequel l'un des paliers (16) est placé sur le manchon (19) et l'autre palier (16) sur le corps de tourillon (18), dans lequel le tourillon (17) s'appuie avec le corps de tourillon (18) entre les paliers (16) sur un support (23) du logement de palier (5) radialement et axialement dans les deux directions et est pourvu d'un dispositif anti-rotation (24), et dans lequel le manchon (19) sert de dispositif de fixation pour la fixation du tourillon (17) dans le support (23).

2. Dispositif d'entraînement selon la revendication 1, **caractérisé en ce que** le manchon (19) est vissé sur le corps de tourillon (18).

3. Dispositif d'entraînement selon la revendication 1 ou 2, **caractérisé en ce que** le manchon (19) s'étend jusqu'au support (23) et est pourvu d'une bride de fixation (26) appuyée sur le support (23).

4. Dispositif d'entraînement selon l'une quelconque des revendications 1 à 3, **caractérisé en ce qu'**au moins une roue motrice (10) est reliée de façon amovible à un arbre (2), un assemblage de transmission (9, 12a) étant prévu entre la roue motrice (10) et l'arbre (2).

5. Dispositif d'entraînement selon la revendication 4, **caractérisé en ce que** l'assemblage de transmission comprend un engrenage de transmission (12a).

6. Dispositif d'entraînement selon l'une quelconque des revendications 1 à 5, **caractérisé en ce que** le palier (16) est placé de manière amovible sur le manchon (19).

7. Dispositif d'entraînement selon l'une quelconque des revendications 1 à 5, **caractérisé en ce que** le palier (16) est placé de manière amovible sur le corps de tourillon (18).

8. Dispositif d'entraînement selon l'une quelconque des revendications 1 à 7, **caractérisé en ce que** le corps de tourillon (18) présente, successivement dans le sens axial, un réceptacle (16a) pour l'un des paliers (16), une surface d'appui (22) pour le support (23) et une zone de fixation (25) pour le manchon (19), dont le diamètre est inférieur au diamètre du corps de tourillon (18) dans la zone de la surface d'appui (22).

9. Tourillon pour un dispositif d'entraînement selon l'une quelconque des revendications 1 à 8, **caractérisé par** un corps de tourillon (18) comprenant une première zone (18a) qui est pourvue d'un réceptacle (16a) pour un palier (16), une deuxième zone (18b) qui est pourvue d'une surface d'appui (22) pour un support (23), séparée de la première zone (18a) par une bride annulaire (20), ainsi qu'une troisième zone (18c) au niveau du côté de la surface d'appui (22) opposé à la bride annulaire (20), dans lequel la troisième zone (18c) comprend une zone de fixation (25) pour un manchon (19), le manchon (19) étant pourvu d'un réceptacle (16a) pour un palier (16) et d'une bride de fixation (26).
